# EUROPÄISCHE PATENTANMELDUNG

(11) **EP 1 477 461 A1**
(43) Veröffentlichungstag der Anmeldung: **17.11.2004**
(21) Anmeldenummer: 03010764.3
(22) Anmeldetag: 14.05.2003
(51) Int. Cl.: C02F 11/12, C02F 11/10

(54) **Vorrichtung und Verfahren zur Trocknung und Vergasung von Schlamm**

(71) Anmelder: Muegge Electronic GmbH, 64385 Reichelsheim (DE); Ecutec Barcelona S.L., 08013 Barcelona (ES); Vermeulen Product Engineering, 7425 Ej Deventer (NL); Spel-Procont s.r.o., 08001 Presov (SK); A.I.T. Abwassersysteme GmbH, 88293 Kellmlünz (DE)
(72) Erfinder: Egner, Siegfried, 74740 Adelsheim (DE); Emmerich, Rudolf, Dr., 76456 Kuppenheim (DE); Taylor, David c/o Pora, LE13OPB Leiceistershire (GB)
(74) Vertreter: Dreiss, Fuhlendorf, Steimle & Becker

(57) **Zusammenfassung**

Es werden ein Verfahren und eine Vorrichtung zur Trocknung und Vergasung von Schlamm, insbesondere von Überschussschlamm aus biologischen Klärprozessen vorgeschlagen, welches in einem Konverter (1) und ohne zwischenzeitliche Abkühlung des Klärschlamms erfolgt. Dadurch baut der erfindungsgemäße Konverter (1) sehr kompact, die Leistung ist sehr hoch und außerdem kann ein nahezu energieautarker Betrieb des Konverters (1) erfolgen. Das Verfahren sieht das thermische Trocknen des Schlamms mit überhitztem Dampf, des Erwärmen des Schlamms durch Mikrowellen- oder Hochfrequenzstrahlung und das Vergasen des Schlamms unter Abwesenheit von Sauerstoff in einem ersten Vergasungsschritt sowie in einer Wasserdampfatmosphäre in einem zweiten Vergasungsschritt vor.

## Beschreibung

### Stand der Technik

Die Erfindung betrifft ein Verfahren zum Trocknen und Vergasen von Schlamm, insbesondere von Überschussschlamm aus biologischen Klärprozessen sowie die technische Ausführung eines Konverters nach dem nebengeordneten Anspruch 8 zur Durchführung des erfindungsgemäßen Verfahrens.

Bislang wird Klärschlamm entweder getrocknet und auf Deponien gelagert oder nach der Trocknung verbrannt. Wenn der Klärschlamm getrocknet und auf Deponien gelagert wird, wird ein sehr großes Deponievolumen beansprucht und außerdem besteht die Möglichkeit, dass nach erfolgter Deponierung chemische und/oder biologische Reaktionen im Klärschlamm beginnen, die im Allgemeinen unerwünscht sind. Wenn der Klärschlamm verbrannt wird, geschieht dies mit einem Restfeuchtegehalt von etwa 30 % in großen Müllverbrennungsanlagen. Da die Müllverbrennungsanlagen und der Entstehungsort der Klärschlämme in der Regel nicht nahe beieinander liegen, ist es erforderlich, große Klärschlammmengen über weite Strecken zu transportieren, bevor sie verbrannt werden können. Beide Verfahren nach dem Stand der Technik sind teuer und belasten die Umwelt.

Ein weiteres Verfahren zur Behandlung von Klärschlamm ist die sogenannte Pyrolyse, bei der eine rotierende, beheizte Schweltrommel den Klärschlamm aufnimmt. Dort wird der Klärschlamm unter Luftabschluss auf bis zu 700° Celsius erhitzt und zersetzt sich in ein Schwelgas und Feststoffe. Mit dem Schwelgas kann bspw. ein Blockheizkraftwerk angetrieben werden. Diese Technik ist bislang nur in wenigen Pilotanlagen ausprobiert worden und hat sich als noch nicht ausgereift erwiesen. Auch bei diesem Verfahren ist der prinzipielle Nachteil vorhanden, dass die großen und teuren Pyrolyseanlagen ortsfest errichtet werden und deshalb der Klärschlamm per LKW oder Zug von den verschiedenen Kläranlagen zu der Pyrolyseanlage transportiert werden muss.

### Vorteile der Erfindung

Mit dem erfindungsgemäßen Verfahren zum Trocknen und Vergasen von Schlamm, insbesondere von Überschussschlamm aus biologischen Klärprozessen, welches die folgenden Verfahrensschritte aufweist:
- Thermische Trocknung des Schlamms mit überhitztem Dampf und Abziehen des dabei entstehenden Wasserdampfs,
- Erwärmen des Schlamms auf eine Vergasungstemperatur durch Mikrowellen oder Hochfrequenzstrahlung,
- Thermolyse des Schlamms unter Abwesenheit von Sauerstoff und Abziehen des entstehenden Produktgases und
- Teiloxidation der kohlenstoffhaltigen Komponenten des Schlamms mit Wasserdampf.

Durch dieses Verfahren ist es möglich, den Klärschlamm schnell und gleichmäßig von Umgebungstemperatur auf eine über der Siedetemperatur liegende Temperatur, beispielsweise auf etwa 150° C, überwiegend mittels überhitztem Dampf bei Atmosphärendruck zu erwärmen. Dadurch, dass der überhitzte Dampf den Schlamm durchströmt und dabei Feuchtigkeit aus dem Schlamm aufnimmt, wird die Trocknung des Schlamms auf einfache und sehr effektive Weise bewirkt.

Nachdem ein Großteil des im Schlamm enthaltenen Wassers verdampft und der dabei entstandene "nasse" Wasserdampf abgezogen wurde, wird der Schlamm auf eine Vergasungstemperatur überwiegend durch Mikrowellen- oder Hochfrequenzstrahlung auf bis zu 600°C erwärmt. Gleichzeitig wird der Schlamm unter Abwesenheit von Luft vergast. Dieser Vorgang wird auch als Thermolyse bezeichnet. Auch hierbei steht die effiziente und schnelle Erwärmung und Vergasung des Schlamms unter Abwesenheit von Luft (Thermolyse) im Vordergrund, welche eine Erhöhung des Schlammdurchsatzes und eine kompakte Bauweise des Konverters ermöglicht. Daran anschließend wird der Schlamm in einer Wasserdampfvergasungsstufe weiter vergast, wobei feste Kohlenstoffverbindungen, wie z. B. Teer oder Koks, oxidiert und vergast werden. Das dabei entstehende Produktgas wird abgezogen. Die verbleibende Trockensubstanz weist ein kleines Volumen und Gewicht auf und ist chemisch inert sowie biologisch nicht mehr aktivierbar, so dass sie ohne weiteres deponierfähig ist.

Bei dem erfindungsgemäßen Verfahren können alle Verfahrensschritte direkt nacheinander in einer Anlage ablaufen, so dass der Bauaufwand für die Errichtung eines Konverters zur Durchführung des erfindungsgemäßen Verfahrens minimiert wird, die Durchsatzmenge maximiert wird und der Energiebedarf minimal ist, da der Schlamm zwischenzeitlich nicht wieder abgekühlt und später erneut erwärmt werden muss.

Die Ausbeute an qualitativ hochwertigem Produktgas kann weiter verbessert werden, wenn den Schlammpellets nach der Thermolyse Wasserdampf in einem "water shift reactor" zugeführt wird. Der im Wasserdampf enthaltene Sauerstoff, ermöglicht und oxidiert den in Feststoffform vorliegenden Kohlenstoff.

Bei einer weiteren Variante der Erfindung wird das Produktgas in einem Blockheizkraftwerk zur Erzeugung von elektrischer Energie und/oder Wärme eingesetzt. Die dabei entstehende elektrische Energie kann für die Mikrowellen- oder Hochfrequenzerhitzung des Schlamms oder zum Antrieb von Förderaggregaten eingesetzt werden. In gleicher Weise kann die im Blockheizkraftwerk anfallende Abwärme, insbesondere des Kühlwassers und der Abgase, zur Vorheizung des Schlamms oder zur Dampfüberhitzung eingesetzt werden. Gleiches gilt für die nach der Vergasung des Schlamms zurückbleibende Trockensubstanz. Diese Trockensubstanz hat eine Temperatur von etwa 850° Celsius und sollte in einem oder mehreren Wärmetauschern abgekühlt werden. Die dabei gewonnene Abwärme kann für das Trocknungsverfahren zum Erhitzen des Dampfes und/oder zur Vorheizung des Schlamms eingesetzt werden. Durch die Kombination dieser verschiedenen Möglichkeiten der Abwärmenutzung, verbunden mit der Erzeugung elektrischer Energie aus dem Produktgas und der erfindungsgemäßen Prozessführung ohne zwischenzeitliches Abkühlen des Schlamms kann das erfindungsgemäße Verfahren nahezu ohne Zufuhr von Fremdenergie durchgeführt werden. Selbstverständlich muss zum Anfahren des Prozesses zunächst Energie aufgebracht werden. Sobald jedoch ein stabiler Zustand bei dem erfindungsgemäßen Verfahren erreicht wurde, läuft das erfindungsgemäße Verfahren im wesentlichen energieautark ab.

Die erfindungsgemäßen Vorteile lassen sich in einem Konverter zur Trocknung und Vergasung von Schlamm, insbesondere von Überschussschlamm aus biologischen Klärprozessen, mit einem Schlammtrockner, einer Mikrowellenquelle und einem Abschnitt zur Vergasung (Thermolyse und Wasserdampfvergasung) des Schlamms vorteilhaft realisieren. Dabei kann der Konverter als kompakte und transportable Baueinheit ausgeführt werden.

Zur weiteren Verbesserung des erfindungsgemäßen Konverters ist vorgesehen, dass der Schlammtrockner einen Dampfabzug zum Abzug des aus dem Schlamm verdampften Wassers und einen Wärmetauscher im Dampfabzug zur Rückgewinnung der im Dampf erhaltenen Verdampfungsenthalpie aufweist.

Ein Teil des aus der Schlammtrocknung abgezogenen Nassdampfs kann in einem zweiten Wärmetauscher mit der Abwärme des bereits vergasten Schlamms auf etwa 700 ° C bis 750 ° C aufgeheizt und zur Teiloxidation der Kohlenstoff-Verbindungen eingesetzt werden.

Der Schlammtrockner arbeitet vorzugsweise mit überhitztem Dampf, welcher direkt mit dem zu trocknenden Schlamm in Kontakt kommt. Dabei wird der Schlamm erwärmt und der überhitzte Wasserdampf nimmt Feuchtigkeit aus dem Schlamm auf.

Des Weiteren ist vorgesehen, dass in dem Abschnitt zur Thermolyse des Schlamms und/oder dem Abschnitt zur Wasserdampfvergasung ein Abzug für das Produktgas, insbesondere mit einem Filter, existiert. Dadurch kann das bei der Verschwelung/Vergasung/Thermolyse entstehende Produktgas einfach gesammelt und einer Nutzung zugeführt werden. Eine solche Nutzung kann vorteilhafterweise darin bestehen, mit Produktgas ein Blockheizkraftwerk anzutreiben, welches den zum Betrieb der Mikrowellenquellen erforderlichen elektrischen Energie und die zur Trocknung des Schlamms erforderliche thermische Energie bereitstellt.

Um die im entgasten Klärschlamm enthaltene Wärme nutzen zu können, können in weiterer Fortbildung des erfindungsgemäßen Konverters mehrere Wärmetauscher vorgesehen sein. Die in den Wärmetauschern gewonnene Abwärme kann zur Trocknung und Aufheizung des Klärschlamms und zur Aufheizung des Wasserdampfs eingesetzt werden.

Eine weitere Vereinfachung der Handhabung des Klärschlamms wird erreicht, wenn vor dem Eintritt in den eigentlichen Konverter eine Pelletierung des Klärschlamms erfolgt. Dadurch wird die Handhabbarkeit des Klärschlamms verbessert und außerdem ist die Wärmeübertragung bei der Schlammtrocknung besser. Durch die vergößerte Oberfläche der Pellets wird auch deren Vergasung verbessert.

Der erfindungsgemäße Konverter kann inclusive aller Nebenaggregate so kompakt ausgeführt werden, dass er transportabel ist, d. h. er kann mit Hilfe eines Sattelschleppers zu einer Kläranlage gefahren werden. Dort kann die Thermolyse und Aufbereitung des Klärschlamms erfolgen, so dass erhebliche Transportmengen eingespart werden. Die eingesparten Transportmengen entsprechen etwa der Menge des ursprünglich im Klärschlamm enthaltenen Wassers und des aus dem Klärschlamm gewonnenen Produktgases. Transportiert werden müssen nur noch die inerten, d. h. chemisch und biologisch nicht mehr aktiven, mineralischen Rückstände, deren Masse und Volumen durch die erfindungsgemäße Behandlung gegenüber dem Ausgangsstoff deutlich reduziert wird.

Weil der erfindungsgemäße Konverter so kompakt gebaut ist, ist es auch nicht nötig, dass jede Kläranlage einen solchen Konverter besitzt, sondern es ist möglich, dass Vertragsunternehmen bei Bedarf eine Kläranlage anfahren, dort die erfindungsgemäße Klärschlammbehandlung vornehmen und anschließend zu einer nächsten Kläranlage weiterfahren.

Weitere Vorteile und vorteilhafte Ausgestaltungen der Erfindung sind den nachfolgenden Zeichnungen, deren Beschreibung und den Patentansprüchen entnehmbar.

### Zeichnungen

- Figur 1: ein Blockdiagramm eines erfindungsgemäßen Konverters und
- Figur 2: ein Anlagenschema eines erfindungsgemäßen Konverters.

### Beschreibung der Ausführungsbeispiele

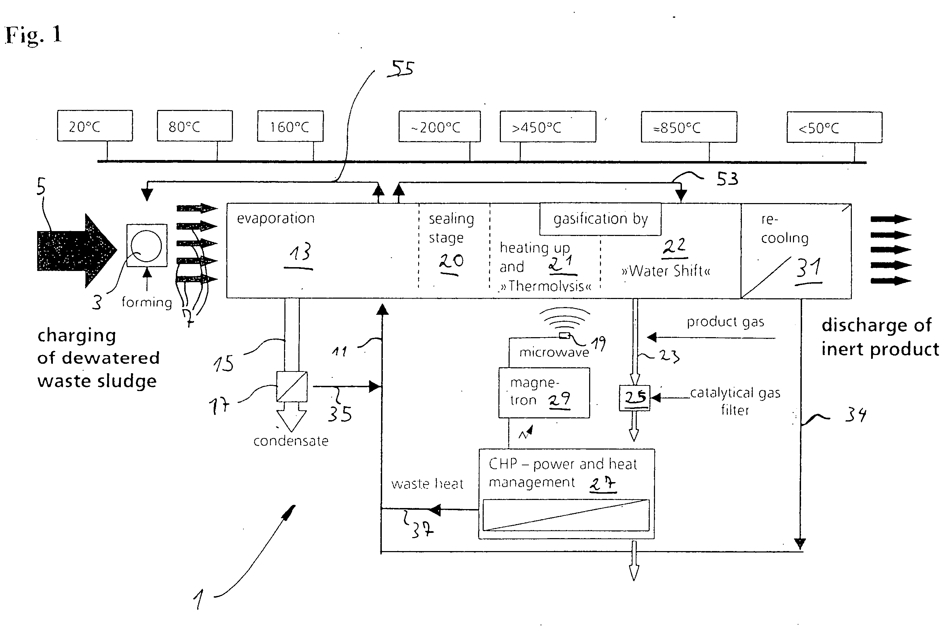

In Figur 1 wird ein Ausführungsbeispiel eines erfindungsgemäßen Konverters 1 als Blockdiagramm dargestellt. Der auf einen Trockensubstanzgehalt von mindestens 25% vorgetrocknete Klärschlamm durchläuft den Konverter 1 von links nach rechts. Der Klärschlamm wird vor dem Eintritt in den eigentlichen Konverter 1 in einer Vorrichtung 3 pelletiert, d. h. zu kleinen Kügelchen geformt. Diese kleinen Kügelchen, auch Pellets genannt, halten so gut zusammen, dass sie den Transport durch den Konverter 1 mehr oder weniger unbeschadet überstehen und auch das Endprodukt, nämlich die getrocknete und entgaste Trockensubstanz des Klärschlamms, nach dem Durchlaufen des Konverters 1 als Pellets vorliegt. Die Pelletierung des Klärschlamms ist in Fig. 1 durch die Aufspaltung des dicken Pfeils 5 in mehrere kleine Pfeile 7 angedeutet.

Die Pellets treten mit einer Temperatur von etwa 80 ° Celsius in den eigentlichen Konverter 1 ein. Dort werden sie mit Hilfe von überhitztem Dampf 11 getrocknet. Es hat sich als vorteilhaft erwiesen, wenn der überhitzte Dampf eine Temperatur von etwa 150 °C bis etwa 180 °C und Umgebungsdruck hat. Allerdings ist die Erfindung nicht auf diesen Temperaturbereich beschränkt. Die Pellets werden mit dem überhitzten Dampf in einem als Schlammtrocknung bezeichneten Bereich 13 in direkten Kontakt gebracht. Dadurch ist es möglich, die Pellets sehr schnell und sehr gleichmäßig zu trocknen. Am Ende der Trocknung haben die Pellets noch einen Restfeuchtegehalt von 5 % oder weniger.

Ein erster Teil des bei der Schlammtrocknung 13 anfallenden Nassdampfs wird durch einen Dampfabzug 15 aus dem Konverter 1 abgezogen. In den Dampfabzug 15 ist ein erster Wärmetauscher 17 (Kondensator) integriert, welcher die im Wasserdampf enthaltene Enthalpie zurückgewinnt und einer erneuten Verwendung zuführt. Beispielsweise kann diese Abwärme zur Aufheizung der Pellets auf ca. 80°C vor dem Eintritt in die Schlammtrockung 13 genutzt werden.

Wenn die Schlammtrocknung im Wesentlichen abgeschlossen wurde, d. h. der Restfeuchtegehalt der Pellets deutlich verringert wurde, werden die Pellets mit einer Mikrowellenquelle 19 bestrahlt. Dabei werden die Pellets von etwa 160 ° Celsius auf bis zu 600° Celsius erwärmt. Die Erfindung ist jedoch nicht auf diese Temperaturen beschränkt. Aufgrund der sehr geringen Restfeuchte erfolgt die nun einsetzende Thermolyse 21 der Pellets ohne Beeinträchtigungen durch das in den Pellets noch enthaltene Wasser.
Zwischen der Schlammtrocknung 13 und der anschließenden Aufheizung durch die Mikrowellenquelle 19 ist eine Trennzone 20 vorgesehen. In der Trennzone 20 ist ein inertes Gas, wie zum Beispiel CO₂ oder N₂ vorhanden, um die Atmosphären der Schlammtrocknung 13 und der Thermolyse 21 gesichert zu trennen.

Bei der Thermolyse 21 werden die Pellets einer physischchemischen Umwandlung unterzogen. Dabei werden die in den Pellets vorhandenen organischen Stoffe im wesentlichen in ein Produktgas umgewandelt. Diese Umwandlung findet durch Einwirkung von Mikrowellenenergie unter Abwesenheit von Sauerstoff statt. Durch die Zufuhr von Wasserdampf in der Wasserdampf-Vergasungsstufe 22 wird eine Oxidation der Kohlenstoff-Verbindungen unterstützt, ohne dass es zu einer vollständigen Oxidation der Kohlenstoff-Verbindungen kommt.

Das entstehende Produktgas (nicht dargestellt) wird in einem Gasabzug 23 abgezogen. In dem Gasabzug 23 ist ein Filter 25 vorgesehen, in dem das Produktgas gereinigt wird. Anschließend gelangt das Produktgas in ein Blockheizkraftwerk 27.

In dem Blockheizkraftwerk 27 wird das Produktgas eingesetzt, um elektrische und thermische Energie bereitzustellen. Die elektrische Energie wird vor allem zum Betreiben der Mikrowellenquelle 19 und zum Antrieb der erforderlichen Fördereinrichtungen (nicht dargestellt in Fig. 1) eingesetzt. Zu diesem Zweck versorgt das Blockheizkraftwerk 27 zum Beispiel einen Mikrowellengenerator 29 mit elektrischer Energie.

Nachdem die Pellets vollständig entgast wurden und somit nur noch eine inerte und biologisch nicht mehr aktive und auch nicht mehr aktivierbare Trockensubstanz zurückgeblieben ist, werden sie einem zweiten Wärmetauscher 31 zugeführt. Dort wird die in den Pellets enthaltene sensible Wärme auf einen Teil des aus der Schlammtrocknung 13 abgezogenen Wasserdampfs übertragen. Dieser Wasserdampf wird in der Wasserdampf-Vergasungsstufe 22 eingesetzt.

In einem dritten Wärmetauscher 33 (Nicht dargestellt in Fig. 1) werden die Pellets auf etwa 50 °C bis 80 °C abgekühlt. Die dabei frei werdende sensible Wärme wird in ebenfalls wieder im Prozess eingesetzt.

Die verschiedenen Möglichkeiten der Abwärmenutzung innerhalb des Konverters 1 sind durch Pfeile 11, 34, 35 und 37 angedeutet. Dabei ist jedoch zu beachten, dass Figur 1 eine vereinfachte Prinzipdarstellung ist. Die unterschiedlichen Temperaturniveaus, auf denen die Abwärme abfällt, können und sollten bei der Anlagenoptimierung berücksichtigt werden. Dies bedeutet bspw., dass nicht Abwärme, die bei einem Temperaturniveau von bis zu 600° C im zweiten Wärmetauscher 31 anfällt, mit der Niedertemperaturabwärme (< 100 ° C) aus dem ersten Wärmetauscher 17 (Kondensator) vermischt wird.

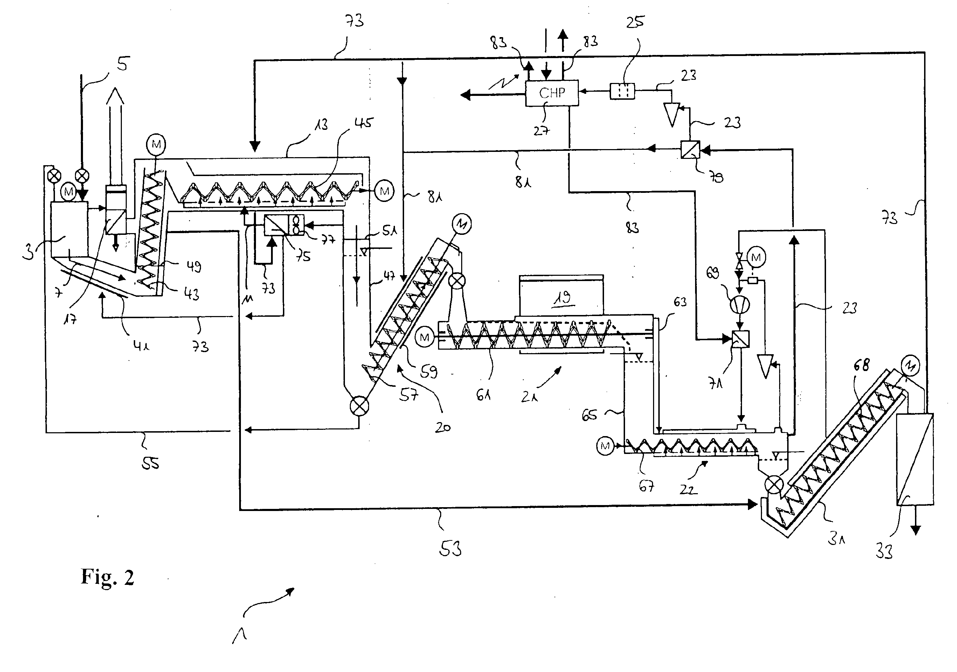

In Figur 2 ist ein Anlagenschema eines weiteren Ausführungsbeispiels eines erfindungsgemäßen Konverters 1 vereinfacht dargestellt. Wegen der Übereinstimmungen zu dem Blockdiagramm der Figur 1 werden in beiden Figruen die gleichen Bezugszeichen verwandt.

Der entwässerte Klärschlamm mit einem Trockensubstanzgehalt von mindestens 25 %, angedeutet durch den Pfeil 5, wird einer Vorrichtung 3 zum Pelletieren zugeführt. Die dabei entstehenden Pellets, welche in Figur 2 durch den Pfeil 7 angedeutet werden, werden durch einen vierten Wärmetauscher 41 vorgewärmt. Anschließend werden die Pellets (nicht dargestellt) durch eine erste Förderschnecke 43 nach oben in die Schlammtrocknung 13 gefördert. In der Schlammtrocknung 13 werden die Pellets durch eine zweite Förderschnecke 45 in horizontaler Richtung durch eine Atmosphäre aus überhitztem Dampf gefördert. Dabei nimmt der überhitzte Dampf Feuchtigkeit aus den Pellets auf und sorgt somit für deren Trocknung. Nachdem die Pellets die Schlammtrocknung 13 durchlaufen haben, fallen sie durch ein Fallrohr 47 nach unten.

Dadurch, dass der überhitzte Dampf in der Schlammtrocknung 13 ein geringeres spezifisches Gewicht hat als die Luft, welche die Pellets vor dem Eintritt in die Schlammtrocknung 13 umgibt, und der überhitzte Dampf ebenfalls ein niedrigeres spezifisches Gewicht hat als die inerte Atmosphäre im Fallrohr 47, bleibt der überhitzte Dampf am höchsten Punkt dieses Anlagenabschnitts, nämlich in der Schlammtrocknung 13. Zwischen der Luft und dem überhitzten Dampf bildet sich eine erste Grenzschicht 49 aus. Zwischen dem überhitzten Dampf und der inerten Atmosphäre im Fallrohr 47 bildet sich eine zweite Grenzschicht 51 aus.

Wenn im Zusammenhang mit der Beschreibung des erfindungsgemäßen Verfahrens von überhitztem Dampf die Rede ist, versteht es sich von selbst, dass der Feuchtegehalt des Dampfes in der Schlammtrocknung 13 örtlich unterschiedlich ist, je nachdem, wie viel Feuchtigkeit der Dampf aus den Pellets bereits aufgenommen hat. Im Bereich der ersten Grenzschicht 49 ist sogar ausschließlich sogenannter Nassdampf vorhanden, der zum einen Teil über den Dampfabzug 15 (siehe Fig. 1) und einen im Dampfabzug 15 (siehe Fig. 1) vorhandenen ersten Wärmetauscher 17 (Kondensator) aus der Schlammtrocknung 13 abgeführt wird. Die Verdampfungsenthalpie dieses Nassdampfes wird im ersten Wärmetauscher 17 (Kondensator) zurückgewonnen und einer weiteren Verwendung zugeführt.

Ein zweiter Teilstrom des Nassdampfes, der durch den Pfeil 53 gekennzeichnet ist, wird einem zweiten Wärmetauscher 31 zugeführt und dort von etwa 130° C bis 150° C auf etwa 700° C bis 750° C aufgeheizt.

Im Anschluss an das Fallrohr 47 wird ein Teil des getrockneten Schlamms abgezogen und der Vorrichtung 3 zur Pelletierung zurückgeführt. Dieser Vorgang ist durch den Pfeil 55 angedeutet. Die verbleibenden Pellets werden durch eine dritte Förderschnecke 57 nach oben gefördert und gleichzeitig auf etwa 200 ° Celsius bis 220 ° Celsius aufgeheizt. Im Fallrohr 47 und der dritten Förderschnecke 57 ist eine inerte Atmosphäre aus zum Beispiel CO₂ oder N₂ vorhanden. Das Fallrohr 47 und der Bereich der dritten Förderschnecke 57 stellen somit eine Trennzone 20 dar, durch welche die Schlammtrocknung 13 von der darauf folgenden Thermolyse 21 getrennt wird.

Die Aufheizung der Pellets auf 220°C erfolgt in einem fünften Wärmetauscher 59, der das Gut in der dritten Förderschnecke 57 beheizt. Die Vergasung der Pellets erfolgt in zwei aufeinander folgenden Stufen, deren erste im Zusammenhang mit der Erfindung als Thermolyse 21 bezeichnet wird und deren zweite Stufe als Wasserdampf-Vergasungsstufe 22 bezeichnet wird. In der Thermolyse 21 werden die Pellets durch eine Mikrowellenquelle 19 ohne Sauerstoff auf Temperaturen auf bis zu 600° Celsius erhitzt. Dabei findet eine Thermolyse der Pellets statt und es entsteht ein Produktgas. Der Abzug dieses Produktgases aus der Vergasung 21 ist in Figur 2 durch einen Pfeil 63 dargestellt. Die Pellets (nicht dargestellt) werden durch die Thermolyse 21 mit Hilfe einer vierten Förderschnecke 61 gefördert.

Wenn die Pellets durch die Thermolyse 21 gefördert wurden, fallen sie durch ein zweites Fallrohr 65 in die Wasserdampf-Vergasungsstufe 22. Um eine weitesgehende Abgrenzung der beiden Vergasungsstufen 21 und 22 zu erreichen, werden die Pellets im Fallrohr bis zu einer definierten Füllhöhe aufgeschüttet. In der Wasserdampf-Vergasungsstufe 22 werden die Pellets (nicht dargestellt) durch eine fünfte Förderschnecke 67 hindurch transportiert. Gleichzeitig wird dem Prozess Wasserdampf bei Temperaturen von annähernd 1.000° Celsius zugeführt. Dadurch wird das Produktgas so umgewandelt, dass langkettige Kohlenstoff-Verbindungen aufgebrochen und zu kürzeren Kohlenstoff-Verbindungen umgewandelt werden (Teiloxidation).
Am Ende der Wasserdampf-Vergasungsstufe 22 enthalten die Pellets (nicht dargestellt) nur noch chemisch und biologisch inertes Material mit überwiegend mineralischen Bestandteilen mit einer Temperatur von 800° Celsius bis 850° Celsius. Aus der Wasserdampf-Vergasungsstufe 22 wird das Produktgas durch einen Gasabzug 23 abgezogen und einer weiteren Verwendung zugeführt.

Im Anschluss an die Wasserdampf-Vergasungsstufe 22 werden die Pellets mit Hilfe einer sechsten Förderschnecke 68 durch einen zweiten Wärmetauscher 31 mit inerter Atmosphäre geführt. Dabei geben sie thermische Energie an einen Teil des aus der Schlammtrocknung 13 abgezogenen Nassdampfs (siehe Pfeil 53) ab und erhitzen diesen Nassdampf auf etwa 700 bis 750 ° Celsius. Dieser Dampf hat Atmosphärendruck und wird mit Hilfe eines Förderaggregats 69 einem sechsten Wärmetauscher 71 zugeführt. Dort wird die Temperatur des Wasserdampfs beispielsweise auf 950° C bis 1050° C, inbesondere auf 987 ° Celsius angehoben. Dieser Wasserdampf wird dann, wie bereits im Zusammenhang mit der Wasserdampf-Vergasungsstufe 22 zuvor erläutert, dem Produktgas und den Pellets in der Wasserdampf-Vergasungsstufe 22 zugeführt.

Die Pellets weisen am Ende des zweiten Wärmetauschers 31 noch eine Temperatur von mindestens 130° Celsius bis 200° Celsius auf und werden in einem dritten Wärmetauscher 33 weiter abgekühlt. Die dabei entstehende Abwärme kann ebenfalls in dem erfindungsgemäßen Konverter 1 genutzt werden.

Nachfolgend wird der Energiehaushalt des erfindungsgemäßen Konverters 1 noch etwas detaillierter erläutert. Ein Pfeil 73 stellt, stark vereinfacht, einen Teil der nutzbaren Abwärmeströme in dem Konverter 1 dar. Wie aus Figur 2 ersichtlich, wird aus dem dritten Wärmetauscher 33 Abwärme gewonnen und der Schlammtrocknung 13 durch einen siebten Wärmetauscher 75 (Überhitzer) zugeführt. Im siebten Wärmetauscher 75 (Überhitzer) wird Wasserdampf, der zuvor aus dem Dampfraum der Schlammtrocknung 13 abzogen wurde, überhitzt und anschließend der nunmehr überhitzte Dampf 11 der Schlammtrocknung 13 wieder zugeführt. Zur Förderung des überhitzten Dampfes 11 ist vor dem siebten Wärmetauscher 75 ein zweites Förderaggregat 77 vorgesehen.

Wie aus Figur 2 ersichtlich ist, tritt das Produktgas aus der Wasserdampf-Vergasungsstufe 22 mit einer sehr hohen Temperatur, nämlich etwa 850° Celsius aus. Bevor dieses Produktgas einem Blockheizkraftwerk 27 zugeführt wird, wird die sensible Wärme dieses Produktgases in einem achten Wärmetauscher 79 zurückgewonnen und zur Beheizung des fünften Wärmetauschers 59 eingesetzt. Dieser Vorgang ist in Figur 2 durch den Pfeil 81 verdeutlicht.

Die Abwärme des Blockheizkraftwerks 27 wird ebenfalls in dem Konverter 1 genutzt, was durch den Pfeil 83 angedeutet ist. Das im achten Wärmetauscher 79 gekühlte Produktgas wird dem Blockheizkraftwerk 27 zugeführt. Vorher kann es noch gefiltert und/oder gereinigt werden.

Die interne Abwärmenutzung innerhalb des Konverters 1, welche durch die Pfeile,73, 81, 55 und 83 angedeutet ist, ist lediglich als schematische Darstellung anzusehen. Wenn beispielsweise die Pfeile 81 und 73 eine Verbindung haben, bedeutet dies lediglich, dass eine Abwärmenutzung möglich ist. An welchen Stellen und bei welchen Temperaturen dies zu geschehen hat, um einen möglichst optimalen Betrieb bei gleichzeitig minimalem Energiebedarf sicherzustellen, muss im Einzelfall festgelegt werden. Dazu kann es erforderlich sein, zusätzliche in Figur 2 nicht dargestellte Wärmetauscher einzusetzen.

Die dem siebten Wärmetauscher 75 (Überhitzer) zugeführte Abwärme (Pfeil 73) verlässt den siebten Wärmetauscher 75 mit reduzierter Temperatur und dient anschließend zur Vorwärmung der Pellets im vierten Wärmetauscher 41.

Der erfindungsgemäße Konverter 1 kann inclusive aller Aggregate, wie bspw. der Vorrichtung 3, dem zweiten Wärmetauscher 31 und dem Blockheizkraftwerk 27 transportabel ausgeführt werden, so dass er zum Einsatzort mit einem LKW geschleppt werden kann. Dadurch lässt sich die Auslastung des erfindungsgemäßen Konverters optimieren, die Betreiber von Kläranlagen sind nicht gezwungen, einen solchen Konverter anzuschaffen, sondern können ihn bei Bedarf mieten oder Lohnunternehmen mit der Trocknung und Inertisierung des Schlamms bei Bedarf beauftragen.

Verfahren und Vorrichtungen zum Trocknen von feuchten Materialen sind in den US-Patenten US 5,228, 211 und US 5,711,086 beschrieben. Die dortige Offenbarung wird hiermit ausdrücklich in die vorliegende Patentanmeldung aufgenommen.

Die in den beiden genannten US-Patenten beschriebenen Verfahren oder Vorrichtungen können, gegebenenfalls mittels einer entsprechenden Anpassung, dazu verwendet werden, das Trocknen des Schlamms mit Hilfe von überhitztem Dampf durchzuführen.

## Patentansprüche

1. Verfahren zum Trocknen und Vergasen von Schlamm, insbesondere von Überschussschlamm aus biologischen Klärprozessen, **gekennzeichnet durch** folgende Verfahrensschritte:
- Thermisches Trocknen des Schlamms mit überhitztem Dampf und Abziehen des dabei entstehenden Dampfs,
- mindestens teilweises Zuführen des Dampfs zu einer Vergasungsstufe,- Erwärmen des Schlamms auf eine Vergasungstemperatur **durch** Mikrowellen- oder Hochfrequenzstrahlung,
- Vergasen des Schlamms in einem ersten Vergasungsschritt (Thermolyse) unter Abwesenheit von Sauerstoff und
- Vergasen des Schlamms in einem zweiten Vergasungsschritt in einer Wasserdampfatmosphäre unter Nutzung des Dampfes aus der Trocknungsstufe und
- Abziehen des entstehenden Produktgases.

2. Verfahren nach Anspruch 1, **dadurch gekennzeichnet, dass** der zur Wasserdampf-Vergasung verwendete Wasserdampf bei der Schlammtrocknung anfällt und durch intern anfallende Abwärme erhitzt wird.

3. Verfahren nach Anspruch 2, **dadurch gekennzeichnet, dass** der Wasserdampfeinem Rezirkulationsstrom der Produktgasatmopshäre zugeführt wird.

4. Verfahren nach einem der vorhergehenden Ansprüche, **dadurch gekennzeichnet, dass** das Produktgas in einem Blockheizkraftwerk (27) zur Erzeugung von elektrischer Energie und/oder Wärme eingesetzt wird.

5. Verfahren nach Anspruch 4, **dadurch gekennzeichnet, dass** die von dem Blockheizkraftwerk (27) erzeugte elektrische Energie für die Mikrowellen- oder Hochfrequenztrocknung des Schlamms eingesetzt wird.

6. Verfahren nach Anspruch 4 oder 5, **dadurch gekennzeichnet, dass** die im Blockheizkraftwerk (27) anfallende Abwärme, insbesondere des Kühlwassers und der Abgase, zur Trocknung des Schlamms eingesetzt wird.

7. Verfahren nach einem der vorhergehenden Ansprüche, **dadurch gekennzeichnet, dass** die nach der Vergasung des Schlamms zurückbleibende Trockensubstanz abgekühlt und die dabei gewonnenen Abwärme zur Trocknung (13) des Schlamms eingesetzt wird.

8. Konverter zur Trocknung und Vergasung von Schlamm, insbesondere von Überschussschlamm aus biologischen Klärprozessen, mit einem Schlammtrockner (13), einer Mikrowellenquelle (19) und einem Abschnitt zur Thermolyse (21) des Schlamms und einem Abschnitt zur Wasserdampf-Vergasung (22) des Schlamms.

9. Konverter nach Anspruch 8, **dadurch gekennzeichnet, dass** der Schlammtrockner (13) einen Dampfabzug (15) aufweist.

10. Konverter nach Anspruch 9, **dadurch gekennzeichnet, dass** der Dampfabzug (15) einen ersten Wärmetauscher (17, Kondensator) aufweist.

11. Konverter nach einem der Ansprüche 8 bis 10, dass der Abschnitt zur Thermolyse (21) des Schlamms einen Gasabzug (63) für das Produktgas aufweist.

12. Konverter nach einem der Ansprüche 8 bis 11, dass der Abschnitt zur Wasserdampf-Vergasung (22) des Schlamms einen Gasabzug (23) für das Produktgas aufweist.

13. Konverter nach Anspruch 12, **dadurch gekennzeichnet, dass** der Gasabzug (23) einen Filter (25) aufweist.

14. Konverter nach einem der Ansprüche 8 bis 13, **dadurch gekennzeichnet, dass** der Konverter (1) ein Blockheizkraftwerk (27) zur Erzeugung von elektrischer Energie und/oder thermischer Energie aus dem Produktgas aufweist.

15. Konverter nach einem der Ansprüche 8 bis 14, **dadurch gekennzeichnet, dass** eine Vorrichtung (3) zur Formgebung des Schlamms, insbesondere zur Pelletierung vorgesehen ist.

16. Konverter nach einem der Ansprüche 8 bis 15, **dadurch gekennzeichnet, dass** ein zweiter Wärmetauscher (31) zur Rückgewinnung der im entgasten Schlamm enthaltenen Wärme vorgesehen ist.

17. Konverter nach einem der Ansprüche 8 bis 16, **dadurch gekennzeichnet, dass** ein dritter Wärmetauscher (33) zur Rückgewinnung der im entgasten Schlamm enthaltenen Wärme vorgesehen ist.

18. Konverter nach einem der Ansprüche 8 bis 17, **dadurch gekennzeichnet, dass** der Konverter (1) transportabel ausgeführt ist.
